# EUROPEAN PATENT APPLICATION

(11) **EP 2 479 028 A1**
(43) Date of publication of application: **25.07.2012**
(21) Application number: 11000574.1
(22) Date of filing: 25.01.2011
(51) Int. Cl.: B32B 37/15, B29C 47/02, B32B 27/08

(54) **Production method for the manufacturing of very thin gas barrier layers of thermoplastic polyethylene-vinylalcohol (EVOH) and product compositions derived from such layers**

(71) Applicant: Mondi Belcoat, Naamloze Vennootschap, 2570 Duffel (BE)
(72) Inventor: Van Edom, Bart René Jos, 3294 Molenstede - Diest (BE); Aerts, Rene, 1970 Wezembeek Oppem (BE)
(74) Representative: Donné, Eddy

(57) **Abstract**

Production method for the manufacturing of very thin gas barrier layers of thermoplastic polyethylene vinylalcohol (EVOH), whereby an extruded layer of EVOH or a coextruded EVOH based film with 2 layers or more (7) is fused to a substrate layer (8) by means of an extrusion coater/laminator characterized in that the molten polymer flows as a thick film from the extrusion head (1) and is, in the distance from the extruder head to the nip, stretched to the very thin thickness of 8 to 150 gsm, preferably of 30 to 80 gsm and is subsequently fused either onto two substrates (8,15) (lamination) on both sides of the polymer base, or onto one substrate (8) (coating) on one side of the polymer base by a pressure roller (9) backed by another roller (10), supported by a guidance roller (12), onto one side of the molten polymer layer whereby a cooling counter roller (11) exerts counter pressure on the opposite side of the polymer layer and cools and hardens the molten film, and after which the finished product leaves the production process at a line speed of 40 to 800 m/min, and more preferably at a line speed of 100 to 300 m/min supported by another guidance roller (13).

## Description

The present invention relates to a production method for the manufacturing of product compositions with very thin gas barrier layers of thermoplastic polyethylene-vinylalcohol (EVOH).

Gas tight membranes are produced today by various coating and lamination techniques. One way of achieving gas tight barriers is by using aluminum foil or metalized film based laminated structures.

A disadvantage of aluminum foil based laminates is that they bear a risk of thermal bridging, electrocution, light reflection and corrosion. Lethal electrocution accidents have occurred when aluminum foil based insulation material was used in the building industry.

A disadvantage of metalized films is that they are susceptible to moisture, and that they are not as gas tight as aluminum foil.

Another disadvantage of aluminum foil or metalized film based laminates is that they are difficult to recycle, and therefore not environmentally friendly.

A good alternative to aluminum or metalized gas barriers is offered by polyethylene-vinylalcohol (EVOH), that can be coextruded, blown and/or cast as film, which in turn is laminated to other substrates to make the final product.

Lamination techniques imply the bonding of various media, one or more substrates and respective EVOH containing film by means of thermal bonding and/or glue lamination.

A disadvantage of these EVOH laminates is the weak bonding of the various substrates especially for very demanding applications.

Another disadvantage of these EVOH laminates is that the extra production step implies a higher cost, in terms of glue needed and vapor evacuation needed, while the barrier layer is not as effective as a moisture barrier layer.

In some cases both substrates are laminated together by means of an extrusion lamination process, using a mono based, coat hanger die extruder, or in rare cases an ABA or AB coextrusion process. Coextrusion produces a minimum of two layers, but can be expanded to three up to seven layers that are simultaneously extruded.

In this way, a better internal adhesion is obtained as well as a closed film barrier. On the other hand, a price is paid in that this extrusion technique limits the barrier layer to thick, expensive layers with no flexibility or potential for improvement.

Moreover, the rather low speed of extrusion techniques required to obtain good barrier layers reduces the productivity and profitability of the production process.

US 2007/0148484 describes a five layer coextrusion composite containing an EVOH/polyolefin composite barrier layer coated or applied to a paper or paperboard substrate.

The blend barrier provides improved oxygen and moisture barrier characteristics and comprises 35% to 95% ethylene vinyl alcohol copolymer. The composite creates a structure with discrete polyolefin domains dispersed in a continuous EVOH matrix. The composite is used in food packaging.

US 2004/0131868 describes a multilayer flexible packaging structure having a vacuum metalized polypropylene or polyester film substrate, a high barrier EVOH layer coextruded or laminated directly on the metal-containing layer and optionally an adjacent layer of a polyolefin.

This structure can be used for food packaging applications.

US 5.460.760 describes a method of extruding ethylene-vinyl alcohol copolymer (EVOH). The method involves the use of an inert polymeric sheath on the surfaces of the extruder to prevent decomposition of the EVOH copolymer and subsequent build up of decomposition products. The protective sheath can be made of polyvinylidenefluoride. The ethylene-vinyl alcohol copolymer is used in high barrier packaging applications.

The present invention aims at countering the limited line speeds of conventional EVOH extrusion coating and lamination by enabling the production of very thin films of EVOH resulting in a faster line speed of the production method.

To this end, a production method for the manufacturing of very thin gas barrier layers of thermoplastic EVOH is used, whereby an extruded layer of EVOH or a coextruded EVOH based film with 2 layers or more is fused to a substrate layer by means of an extrusion coater/laminator whereby the molten polymer flows as a thick film from the extrusion head and is, in the distance from the extruder head to the nip, stretched to the very thin thickness of 8 to 150 gsm , preferably of 30 to 80 gsm and is subsequently fused either onto two substrates (lamination) on both sides of the polymer base, or onto one substrate (coating) on one side of the polymer base by a pressure roller backed by another roller, supported by a guidance roller, onto one side of the molten polymer layer whereby a cooling counter roller exerts counter pressure on the opposite side of the polymer layer and cools and hardens the molten film, and after which the finished product leaves the production process at a line speed of 40 to 800 m/min, and more preferably at a line speed of 100 to 400 m/min supported by another guidance roller.

Preferably, stretching is controlled by matching the extruder screw rotation speed to the cooling counter pressure cylinder rotation speed. This can be achieved by varying the extruder screw rotation speed between 6 and 344 rpm, more preferably between 15 and 86 rpm, and by varying the cooling counter pressure cylinder rotation speed between 15.9 rpm and 318.7 rpm, more preferably between 39.8 rpm to 79.6 rpm.

The high line speed and the other extrusion parameters result in the prevention of polymer chain scission which prevents layer breakage and disintegration which would normally be expected for these very thin layers, so that a stable and continuous very thin layer of EVOH is extruded or coextruded with a thickness of 8 to 150 gsm, and more preferably a thickness of 30 to 80 gsm .

Preferably, the EVOH used contains an ethylene content of 20 to 50 mol%, more preferably of 25 to 35 mol%.

An advantage of this production method for such very thin barrier layers of EVOH is that it provides a low production cost and is suitable for a wide range of product compositions, suitable for various market segments and applications.

Another advantage of these very thin layers of EVOH is that the cost of the EVOH chemical is reduced due to the very low thickness, while gas and aroma barrier properties are maintained, as well as UV protection properties.

The gas barrier properties were quantified as showing an oxygen transmission rate of maximally 20 ml/m² 24 h, and preferably of maximally 5 ml/m² 24 h.

Another advantage of the very thin layers of monolithic EVOH produced in this way is that they do not show discontinuities in the layer and as such can be incorporated into products.

With the intention to better show the features of the invention a preferred embodiment is described of an extrusion equipment for the production of very thin EVOH layers according to the invention, with reference to the accompanying figures, wherein :
figure 1 schematically represents a frontal view of an extrusion head used to produce very thin layers of EVOH according to the invention;
figure 2 represents a cross section according to line II-II of figure 1;
figure 3 schematically represents a cross section of an extrusion coating equipment using the extrusion head of figures 1 and 2;
figure 4 schematically represents a cross section of an extrusion lamination equipment using the extrusion head of figures 1 and 2.

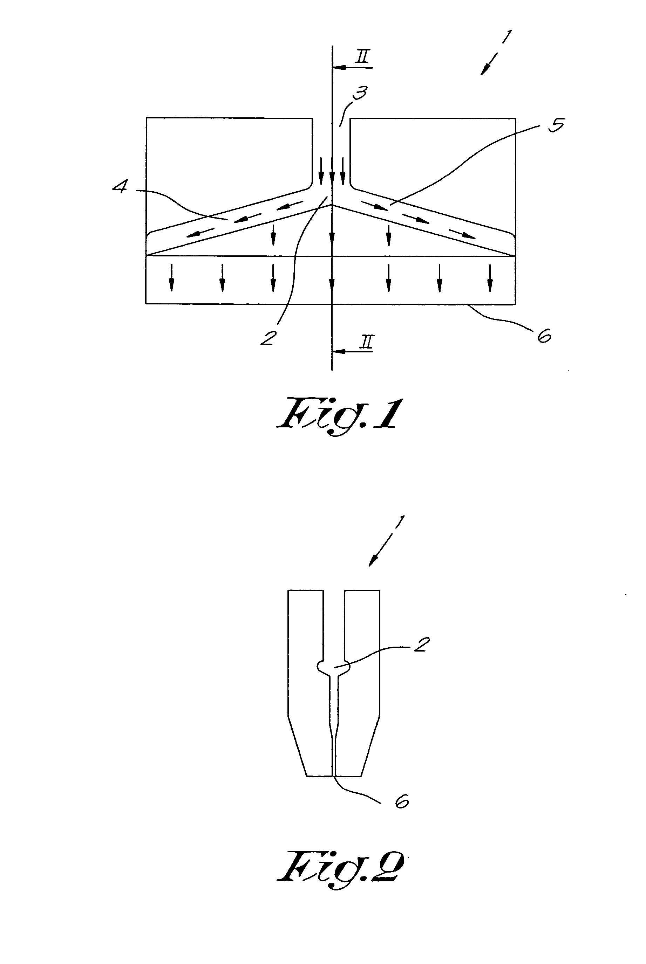

The extrusion head represented in figures 1 and 2 is of a known type with a distribution chamber 2 in the shape of a coat hanger with an inlet 3 for molten polymer and two branches 4,5 which are slanting down and which are communicating with an outlet in the shape of a thin narrow slit 6 extending over the width of the coat hanger type distribution chamber 2 of the extrusion head 1.

The functioning of the extrusion head 1 in figure 1 is simple and as follows. The thermoplastic EVOH is molten in the extrusion head 1 at a temperature of between 150 °C and 270 °C and more preferably of 230 °C, after which the polymer is guided through the inlet 3 of the distribution chamber 2 of the coat hanger extrusion head 1, and subsequently through the coat hanger shaped arms 4,5 of the distribution chamber 2.

The polymer is subsequently guided as a very thin layer through the extrusion mouth with an adjustable die 6 that has been adjusted to a die opening of less than 1000 µ (or 0.1 mm), and preferably of 800 p.

The extrusion speed of the polymer through the extrusion head has to be sufficiently high, namely between 40 and 800 m/min, and most preferably of between 100 m/min and 300 m/min as measured at the counter cooling roller 11.

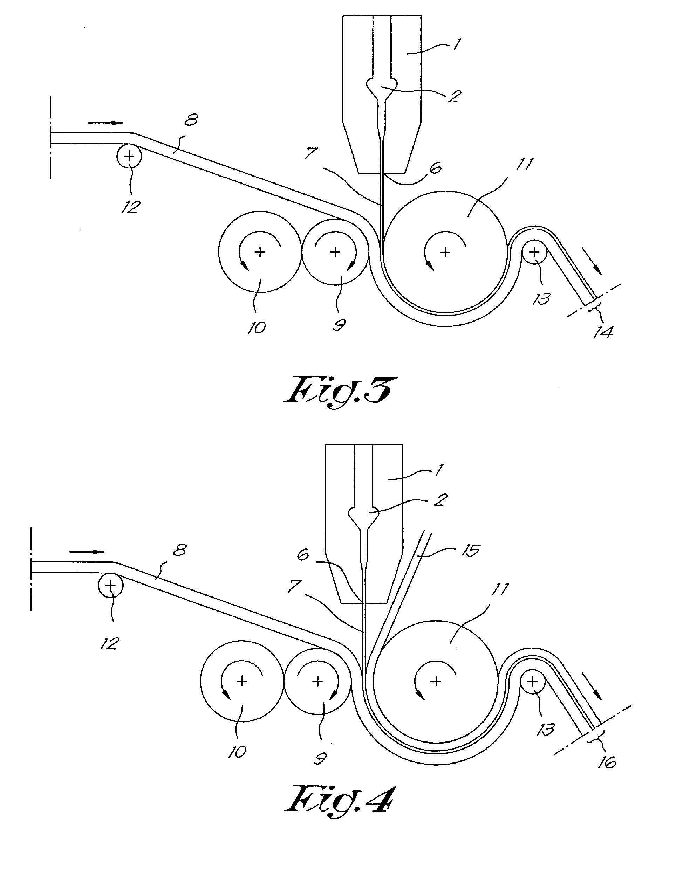

In figure 3 an extrusion coater is represented with an extrusion head 1 and a molten EVOH 7, a substrate 8 and a pressure roller 9 with a back-up roller 10, a cooling counter pressure roller 11, which can be coated with teflon and guidance rollers 12 and 13 as used in the manufacturing of a very thin EVOH based product 14 according to the invention.

The functioning of the extrusion coater in figure 3 can be explained as follows. The molten EVOH 7 flows as a thick film from the extrusion head 1 and is, in the distance from the extruder head to the nip, stretched to the very thin thickness of 8 to 150 gsm , preferably of 30 to 80 gsm. The film is then fused by a pressure roller 9 backed by another roller 10 to a substrate 8, supported by a guidance roller 12, onto one side of the molten polymer layer 7 whereby a cooling roller 11 exerts counter pressure and cools and hardens the molten film, after which the finished product 14 leaves the production process supported by another guidance roller 13.

In figure 4 an extrusion laminator is represented with an extrusion head 1 and a molten polymer 7, two substrate layers 8 and 15, a pressure roller 9 with back-up roller 10, a cooling counter pressure roller 11 which can be coated with teflon and guidance rollers 12 and 13 as used in the manufacturing of a very thin EVOH based laminated product 16 according to the invention.

The functioning of the extrusion laminator in figure 4 can be explained as follows. The molten polymer 7 flows as a relatively thick film from the extrusion head 1 and is, in the distance from the extruder head to the nip, stretched to the very small thickness of 8 to 150 gsm, preferably of 30 to 80 gsm. The film is then fused by the pressure roller 9 onto two substrates 8 and 15, on both sides of the molten polymer layer 7 whereby a cooling roller 11 exerts counter pressure and cools and hardens the molten film, after which the finished product 16 leaves the production process, supported by guidance roller 13.

The substrates 8,15 coated with a very thin EVOH layer can be diverse: porous or nonporous materials, woven or nonwoven polymer, fibers and filaments, film, metalized film, aluminum, paper, scrim, glass fiber tissue, textile and other materials.

These materials, containing a very thin EVOH layer find applications in many domains: building insulation materials, gas tight packaging materials, protective clothing, technical textiles, and other applications with gas tight barriers.

The present invention is in no way limited to the embodiments described in the figures, but such a production method for the production of such very thin EVOH layers and the incorporation of these layers in end products can be applied in several embodiments, without leaving the scope of the invention.

## Claims

1. Production method for the manufacturing of very thin gas barrier layers of thermoplastic polyethylene vinylalcohol (EVOH), whereby an extruded layer of EVOH or a coextruded EVOH based film with 2 layers or more is fused to a substrate layer by means of an extrusion coater/laminator **characterized in that** the molten polymer flows as a thick film from the extrusion head and is, in the distance from the extruder head to the nip, stretched to the very thin thickness of 8 to 100 micrometer, preferably of 30 to 60 micrometer and is subsequently fused either onto two substrates (lamination) on both sides of the polymer base, or onto one substrate (coating) on one side of the polymer base by a pressure roller backed by another roller, supported by a guidance roller, onto one side of the molten polymer layer whereby a cooling counter roller exerts counter pressure on the opposite side of the polymer layer and cools and hardens the molten film, and after which the finished product leaves the production process at a line speed of 40 to 800 m/min, and more preferably at a line speed of 100 to 300 m/min supported by another guidance roller.

2. Production method according to claim 1, **characterized in that** the EVOH used contains an ethylene content of 20 to 50 mol%, and more preferably of 25 to 35 mol%.

3. Production method according to claim 1, **characterized in that** the cooling counter roller is coated with teflon.

4. Production method according to claim 1, **characterized in that** stretching is controlled by matching the extruder screw rotation speed to the cooling counter pressure cylinder rotation speed.

5. Production method according to claim 4, **characterized in that** the extruder screw rotation speed varies between 6 and 344 rpm, more preferably between 15 and 86 rpm, and **in that** the cooling counter pressure cylinder rotation speed varies between 15.9 rpm and 318.7 rpm, more preferably between 39.8 rpm to 79.6 rpm.

6. Product compositions, **characterized in that** they contain a gas tight barrier layer of EVOH of a thickness from 8 to 150 gsm.

7. Product compositions according to claim 6, **characterized in that** they contain a gas tight barrier layer of EVOH of a thickness from 30 to 80 gsm.

8. Use of product compositions according to claim 6 in applications with gas tight barriers such as building insulation materials, gas tight packaging materials, protective clothing, technical textiles, and other applications requiring a gas tight barrier.
